# EUROPÄISCHE PATENTANMELDUNG

(11) **EP 2 305 609 A1**
(43) Veröffentlichungstag der Anmeldung: **06.04.2011**
(21) Anmeldenummer: 10189018.4
(22) Anmeldetag: 15.01.2007
(51) Int. Cl.: C02F 1/00, C02F 1/50

(54) **Anordnung zum Vitalisieren von Wasser**

(30) Priorität: 19.01.2006 DE 202006000837 U; 22.02.2006 DE 202006002954 U
(62) Teilanmeldung aus: 07000685.3
(71) Anmelder: Weitz, Richard, 63839 Kleinwallstadt (DE)
(72) Erfinder: Weitz, Richard, 63839 Kleinwallstadt (DE)
(74) Vertreter: Stoffregen, Hans-Herbert

(57) **Zusammenfassung**

Die Erfindung bezieht sich auf eine Anordnung zum Vitalisieren von Wasser umfassend ein Gehäuse (110) mit einer Wasserein- und -auslassöffnung (104, 106), wobei im Strömungsweg zwischen Einlass- und Auslassöffnung eine Verwirbelungseinrichtung verläuft und der Strömungsweg zumindest abschnittsweise von einer Aufnahme (121) begrenzt ist, in der ein das Wasser beeinflussendes Medium enthalten ist. Um mit konstruktiv einfachen Maßnahmen im hinreichenden Umfang eine Vitalisierung von Wasser zu ermöglichen, wird vorgeschlagen, dass das Gehäuse (110) doppelwandig mit Außen- und Innenwandung (112, 114) ausgebildet ist, die die geschlossene Aufnahme (121) für das Medium begrenzen, dass die Innenwandung den Strömungsweg begrenzt und dass von der Innenwandung (112) sich in den Strömungsweg erstreckende die Verwirbelungseinrichtung bildende Vorsprünge (122) ausgehen und die Einlassöffnung (104) im Bereich einer Stirnseite und die Auslassöffnung (106) in gegenüberliegender Stirnseite des Gehäuses (110) verläuft.

## Beschreibung

Die Erfindung bezieht sich auf eine Anordnung zum Vitalisieren von Wasser umfassend ein Gehäuse mit einer Wasserein- und -auslassöffnung, wobei im Strömungsweg zwischen Einlass- und Auslassöffnung eine Verwirbelungseinrichtung verläuft und der Strömungsweg zumindest abschnittsweise von einer Aufnahme begrenzt ist, in der ein das Wasser beeinflussendes Medium enthalten ist.

Eine entsprechende Vitalisierungsanordnung ist dem AT-U-7821 zu entnehmen. Die Anordnung wird unmittelbar einer Wasserentnahmestelle eines Verbrauchers nachgeschaltet und wird z. B. an einem Wasserhahn befestigt. Dabei werden durch die Vitalisierungsanordnung dem Wasser die natürlichen Eigenschaften wieder zugeführt, wie diese in der Natur vorliegen. Hierzu wird in der AT-U-7821 auf den Seiten 2 und 3 erläuternd Folgendes ausgeführt:
"Die moderne Wasserforschung befasst sich insbesondere mit den physikalischen Einflüssen wie Druck, Bewegung oder Strahlung, welchen Wässer auf ihrem Weg von der Quelle bis zum Wasserhahn im Haushalt ausgesetzt ist und mit den durch diese Einflüsse bewirkten, überwiegend nachteiligen Veränderungen der Wässer. Zur Erklärung, was unter vitalem Wasser zu verstehen ist, folgendes Beispiel: Bei einem Wasserfall stürzt Wasser infolge der Schwerkrafteinwirkung abwärts, und zwar zuerst als noch ungeteilter Wasserkörper, dann als zopfartiger Strom, wonach dann immer feinere, kleinteiligere Strukturen folgen, bedingt durch den Luftwiderstand einerseits und das Erdmagnetfeld andererseits. Das Erdmagnetfeld wirkt auf die Wassermoleküle, welche ja elektromagnetische Dipole darstellen, womit das Wasser selbst ein elektrisches Feld generiert.
Zugleich stellt das Rauschen mit praktisch allen hörbaren und nicht hörbaren Frequenzen ein akustisches Phänomen strömenden Wassers dar. Am Fuße des Wasserfalls trifft das Wasser auf den meist felsigen Untergrund, aus welchem es z. B. Mineralien löst.
Zusätzlich beeinflussen die Eigenschwingungen der Mineralien der Felsen, wie z. B.
Quarzkristalle, die Struktur des Wassers. Das derart energetisch aufgeladene und mit den ihm auf natürliche Weise aufgeprägten Informationen ausgestattete Wasser gelangt,
ausgehend von einer Quellfassung über Rohrleitungen, Schieber, Ventile, Speicherkammern, Desinfektionsstufen und dgl. letztlich in die Wasserentnahmestellen bei den Verbrauchern.

Auf dem meist langen Weg von der Quelle zum Verbraucher wird das Wasser der ihm von der Natur aufgeprägten Inhalte an Information und Energie weitgehend beraubt und es kommt zur Umwandlung in weniger günstige oder schädlich Informations- und Energieformen. Heute ist es weitgehend anerkannt, dass derartiges Wasser Physis und Psyche des Menschen ungünstig beeinflusst, und so haben es sich viele Forscher zum Ziel gesetzt, dem Wasser jene Information und Lebendigkeit zurückzugeben, welches es ursprünglich von Natur aus mitbekommen hat."

Die vorbekannte Vitalisierungsanordnung ist jedoch konstruktiv aufwändig und bietet insbesondere aufgrund eines integrierten Aktivkohlefilters und dem nur geringen Kontakt mit einem rohrförmigen Vitalisierstab als die das Wasser mitbeeinflussende Medium enthaltende Aufnahme nicht die gewünschte Vitalisierung.

Zur Aufbereitung von Wasser ist nach der DE-A-100 00 345 vorgesehen, dass das Wasser durch im Schnitt sechseckige Leitungen geführt wird, die einen Behältermantel durchströmen, in dem Informationen enthalten sind, die dem Wasser vermittelt werden sollen.

Bei einer Wasseraufbereitungsanlage nach dem DE-U-203 09 556 wird Wasser durch ein Gehäuse geführt, wobei sich im Strömungsweg Halbedelsteine befinden, die energetisiert werden können.

Um einen Informationskörper von Wasser umströmen zu lassen, sieht das DE-U-202 03 596 ein Gehäuse mit einer Strömungsscheibe vor, durch die dem Wasser eine spiralförmig verlaufende Strömung aufgezwungen wird.

Steine sowie eine aus Ton bestehende Wendel befinden sich in einem Gehäuse zur Wasseraufbereitung nach dem DE-U-201 16 136. Dabei ist die Wendel selbst rechtsdrehend ausgebildet und als Einsatz in dem Gehäuse anordbar.

Das DE-U-93 16 975 hat ein Gerät zum Aufbereiten von Wasser zum Gegenstand. Das Wasser durchströmt ein Gehäuse, in dem Edelsteinkristalle vorgesehen sein können. Ferner ist ein Keramikrohr vorhanden, durch das das zu behandelnde Wasser strömt.

Der vorliegenden Erfindung liegt die Aufgabe zu Grunde, eine Anordnung der eingangs genannten Art so weiterzubilden, dass mit konstruktiv einfachen Maßnahmen im hinreichenden Umfang eine Vitalisierung von Wasser möglich ist, wobei das die Anordnung durchströmende Wasser im hinreichenden Umfang mit dem das Wasser beeinflussenden Medium bzw. dessen Begrenzung in Kontakt gelangt. Auch soll eine gute Verwirbelung ermöglicht werden.

Zur Lösung der Aufgabe sieht die Erfindung im Wesentlichen vor, dass das Gehäuse doppelwandig mit Außen- und Innenwandung ausgebildet ist, die die geschlossene Aufnahme für das Medium begrenzen, dass die Innenwandung den Strömungsweg begrenzt und dass entweder die Innenwandung koaxial zu einer eine zweite Aufnahme bildenden rohrförmigen Aufnahme verläuft, die umfangs- und bodenseitig zu der Innenwandung beabstandet verläuft, wobei Zwischenraum zwischen der Innenwandung und der zweiten Aufnahme in zwei Teilräume unterteilt ist, von denen einer mit der Einlassöffnung und der andere mit der Auslassöffnung verbunden ist, die Teilräume im Bodenbereich des Gehäuses miteinander verbunden sind und innerhalb zumindest einem der Teilräume die Verwirbelungseinrichtung angeordnet ist, oder dass von der Innenwandung sich in den Strömungsweg erstreckende die Verwirbelungseinrichtung bildende Vorsprünge ausgehen und die Einlassöffnung im Bereich einer Stirnseite und die Auslassöffnung in gegenüberliegender Stirnseite des Gehäuses verläuft.

Erfindungsgemäß wird nach einer Alternativen das Gehäuse der Vitalisierungsanordnung unterteilt, um ungeachtet einer kompakten Bauweise das Wasser einen relativ langen Weg durch das Gehäuse strömen zu lassen, wobei eine hinreichende Verwirbelung erfolgt. Ferner wird der Strömungsweg des Wassers von Wandungen begrenzt, die ihrerseits das das Wasser beeinflussende Medium begrenzen, so dass das Medium im hinreichenden Umfang das vorbeiströmende Wasser beeinflussen kann. Somit werden im Vergleich zu der bekannten Vitalisierungsanordnung die Verweilzeit in dem Gehäuse und der Kontakt mit den Begrenzungen der das Medium aufnehmenden Aufnahmen vergrößert.

Insbesondere ist vorgesehen, dass von der als erstes Innenrohr ausgebildeten zweiten Aufnahme sich in die jeweiligen Teilräume erstreckende die Verwirbelungseinrichtung bildende Vorsprünge ausgehen. Hierbei kann es sich um Edelstahlelemente handeln, die unter verschiedenen Winkeln von dem ersten, also innersten Rohr ausgehen und insbesondere mit diesem durch Schweißen verbunden sind. Es erfolgt eine Verwirbelung des durchfließenden Wassers mit der Folge, dass natürliche Bedingungen für das Wasser mit konstruktiv einfachen Maßnahmen realisiert werden.

Um sicherzustellen, dass das Wasser nicht unmittelbar von der Ein- zur Auslassöffnung strömen kann, sondern über die gesamte Länge der Teilräume entlang des ersten Innenrohrs, ist in Weiterbildung vorgesehen, dass von dem ersten Rohr radial abragende flächige Trennelemente wie Trennbleche ausgehen, die sich über die gesamte Länge des ersten Innenrohrs erstrecken. Dabei enden die Trennelemente beabstandet zur Bodenfläche der Innenwandung vorzugsweise im Bereich bodenseitiger Stirnfläche des ersten Innenrohrs.

Die Innenwandung selbst wird nach einem weiteren Vorschlag der Erfindung durch ein zweites Innenrohr mit geschlossenen Stirnflächen gebildet, das das erste Innenrohr umfangsseitig koaxial umgibt.

Die Außenwandung wird von einem eine Zylinder- oder Mehrkantsäulengeometrie aufweisenden Außenmantel gebildet, der boden- und kopfseitig geschlossen ist. Als Mehrkantsäulengeometrie kommt insbesondere eine im Schnitt Sechskantsäulengeometrie in Betracht. Unabhängig hiervon sollten dabei kopfseitige Stirnfläche des zweiten Innenrohrs und kopfseitige Fläche des Außenmantels bzw. der Außenwandung flächig aufeinanderliegen und miteinander verbunden sein. Des Weiteren sollte das erste Innenrohr kopfseitig durch kopfseitige Stirnfläche bzw. -wandung des zweiten Innenrohrs verschlossen sein.

Die Ein- und Auslassöffnung ist jeweils durch einen Rohrabschnitt gebildet, der den Zwischenraum zwischen Außenmantel und zweitem Innenrohr durchsetzt und gegenüber diesen abgedichtet ist. Somit strömt das Wasser unmittelbar vom Äußeren des Gehäuses in den Zwischenraum zwischen dem ersten und dem zweiten Innenrohr.

Um die ersten und zweiten Aufnahmen, also das erste Innenrohr sowie den Zwischenraum zwischen dem zweiten Innenrohr und dem Außenmantel mit dem das Wasser beeinflussenden Medium zu befüllen, sind verschließbare Öffnungen vorgesehen, die in den kopfseitigen Stirnbereichen verlaufen. Die Öffnungen selbst können nach Befüllung der Aufnahmen durch Nieten verschlossen werden.

Bei dem Medium kann es sich insbesondere um hochwertige Quellwässer handeln.

Nach einer zweiten Alternative zeichnet sich die Erfindung dadurch aus, dass die Innenwandung durch einen ersten Rohrabschnitt gebildet ist, der von einem die Außenwandung bildenden zweiten Rohrabschnitt umgeben ist, dessen Ränder mit dem ersten Rohrabschnitt verbunden wie verschweißt sind, und dass von dem ersten Rohrabschnitt die als Hohlelemente wie hohle Rundstahlelemente ausgebildeten Vorsprünge ausgehen, die mit der das Medium enthaltenen Aufnahme verbunden sind. Dabei ist insbesondere vorgesehen, dass die Vorsprünge in Strömungsrichtung geneigt zur Längsachse des Gehäuses verlaufen. Insbesondere sollte die Längsachse des Vorsprungs zur Längsachse des Gehäuses einen Winkel α mit 45° ≥ α ≥ 15°, insbesondere α ≈ 30° einschließen.

Um eine hinreichende Verwirbelung zu ermöglichen, ohne dass der wirksame Querschnitt des Innenrohrs derart verändert wird, dass ein zu hoher Strömungswiderstand aufgebaut wird, ist vorgesehen, dass das freie Ende des Vorsprungs beabstandet zur Mittelachse des ersten Rohrabschnitts verläuft, der seinerseits außerhalb des zweiten Rohrabschnitts ein Außengewinde aufweist, um z. B. in eine Wasserleitung eingeschraubt werden zu können.

Zur Geometrie der Vorsprünge ist des Weiteren anzumerken, dass diese in Längsrichtung des Rohrabschnitts betrachtet radial verlaufen sollten. Auch sollten in Längsrichtung des Rohrabschnitts betrachtet die Vorsprünge gleichmäßig verteilt von der Innenfläche des Innenrohrs ausgehen.

Die mit dem das Wasser beeinflussenden Medium gefüllten Vorsprünge sollten in unterschiedlichen Höhen, also Querschnittsebenen des ersten Rohrabschnitts verlaufen. Bei dem Medium kann es sich z. B. um hochwertige Quellwässer handeln.

Ist bevorzugterweise vorgesehen, dass sämtliche Elemente, d. h. der Außenmantel, das erste und das zweite Innenrohr, die von dem Innenrohr ausgehenden Vorsprünge, die die Ein- und Auslassöffnungen bildenden Rohrabschnitte, die Trennelemente sowie die Nieten aus Edelstahl bestehen, so kommen andere geeignete Materialien wie z. B. Keramik und/oder Glas gleichfalls in Frage. Dabei hängt die Wahl des Materials bevorzugterweise von den dem Wasser zu vermittelnden Eigenschaften ab.

Unabhängig hiervon ist vorgesehen, dass mit dem Wasser in Berührung gelangende Bereiche der Vorrichtung mit einem desinfizierenden Material versehen wie beschichtet sind oder ein solches Material aufweisen. Insbesondere sollten die mit dem Wasser in Berührung gelangenden Bereiche mit Silber oder einem Silber enthaltenden Material versehen wie beschichtet sein oder Silber oder Silber enthaltendes Material aufweisen.

Die Dimensionierung des Gehäuses und der Einbauten in diesem hängt von der Menge des durchströmenden Wassers ab. Das Gehäuse bzw. die Außenummantelung sollte jedoch derart ausgelegt sein, dass ein Wasserdruck bis 20 bar im Temperaturbereich zwischen +1°C und 95°C beherrschbar ist.

Querschnitte der Eintritts- und Austrittsöffnungen sowie Querschnittsänderungen, die durch die Verwirbelungseinrichtung bzw. Trennelemente bewirkt werden, sollten derart dimensioniert sein, dass bei maximalem Durchfluss ein maximaler Druckverlust von 0,4 bar auftritt.

Das Gerät ist stromlos und ohne Zusätze betreibbar, so dass eine Service- und Wartungsfreiheit gegeben ist.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: einen Längsschnitt durch eine erste Ausführungsform eines Vitalisierungsgerätes,
- Fig. 2: einen Schnitt entlang Linie II-II in Fig. 1,
- Fig. 3: eine Seitenansicht einer weiteren Ausführung eines Vitalisierungsgerätes, teilweise geschnitten,
- Fig. 4 und 5: weitere Darstellungen des Vitalisierungsgerätes gemäß Fig. 3 und
- Fig. 6: einen Querschnitt durch das Vitalisierungsgerät gemäß Fig. 3.

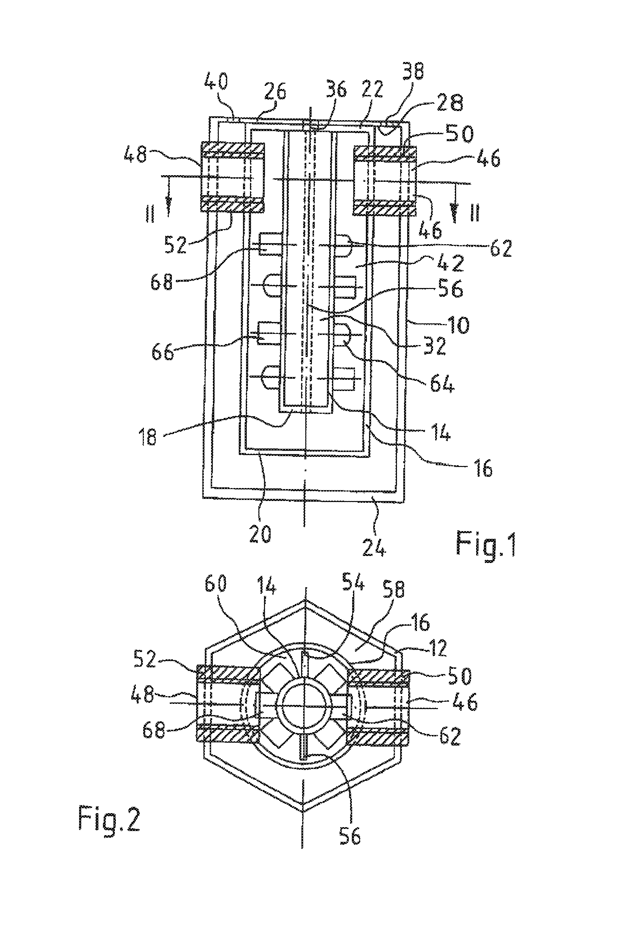

In Fig. 1 ist rein schematisch eine Anordnung zum Vitalisieren von Wasser dargestellt, durch die das Wasser weitgehend seine ursprünglichen Eigenschaften wiedergewinnen soll. Die Anordnung umfasst ein Gehäuse 10, das aus einem im Ausführungsbeispiel eine Sechskantsäulenform aufweisenden Außenmantel 12, einem ersten Innenrohr 14 sowie einem zweiten Innenrohr 16 besteht. Das zweite Innenrohr 16 umgibt koaxial das erste Innenrohr 14. Das erste und zweite Innenrohr 14, 16 sind bodenseitig durch Stirnflächen bildende bodenseitige Stirnwandungen 18, 20 verschlossen. Das zweite Innenrohr 16 weist des Weiteren eine kopfseitige Stirnwandung 22 auf, über die im Ausführungsbeispiel das erste Innenrohr 14 verschlossen ist.

Der Außenmantel 12 weist gleichfalls eine Bodenwandung 24 sowie eine Kopfwandung 26 auf, wobei die Kopfwandung 22 des zweiten Innenrohrs 16 flächig an der Innenfläche 28 der Kopfwandung 26 der Außenummantelung 12 anliegt und mit dieser verbunden ist. Durch die diesbezügliche Konstruktion ergeben sich zwei Aufnahmen 30, 32 für ein Medium, das ein das Gehäuse 10 durchströmendes Wasser beeinflusst.

Die erste Aufnahme 30 wird durch den Zwischenraum zwischen Außenummantelung 12 und dem zweiten Innenrohr 16 gebildet. Die zweite Aufnahme 32 ist der Innenraum des ersten Innenrohrs 14.

Sowohl die erste als auch die zweite Aufnahme 30, 32 sind über in den Kopfwandungen 22, 24 verlaufende Öffnungen 36, 38, 40 zugänglich, die nach dem Befüllen mit dem das Wasser beeinflussenden Medium durch Niete verschließbar sind.

Der zwischen dem ersten und zweiten Innenrohr 14, 16 verlaufende Zwischenraum 42 wird von dem zu vitalisierenden Wasser durchströmt. Hierzu sind eine Einlassöffnung 46 und eine Auslassöffnung 48 vorgesehen, die durch Muffen oder Rohrabschnitte 50, 52 begrenzt werden, die die Außenummantelung 12 und dem zweiten Innenrohr 16 durchsetzen und mit diesen flüssigkeitsdicht verbunden sind. Somit kann die zu vitalisierende Flüssigkeit über die Einlassöffnung 46 in den Zwischenraum 42 und von diesem über die Auslassöffnung 48 strömen. Dabei kann die Einlassöffnung 46, d. h. die Muffe bzw. der Rohrabschnitt 50 mit einem Wasserhahn verbunden sein, wohingegen die Auslassöffnung 48 in einer Flüssigkeitsentnahme mündet.

Damit die Flüssigkeit nicht unmittelbar von der Einlass- zur Auslassöffnung 46, 48 strömen kann, ragen von dem ersten Innenrohr 14 flächige Trennelemente 54, 56 ab, die den Zwischenraum 42 über seine Höhe in zwei Teilräume 58, 60 unterteilen. Dabei können die Trennelemente 54, 56 bis zur Innenfläche des zweiten Innenrohrs 36 - oder wie dies der Fig. 2 zu entnehmen ist - in kurzem Abstand zu dieser enden. Unabhängig hiervon bewirken die Trennelemente 54, 56, dass das über die Einlassöffnung 46 zuströmende Wasser im Wesentlichen über die Länge des ersten Innenrohrs 14 bis zu dessen Bodenwandung strömt, um sodann in den zweiten Teilraum 46 zu gelangen und über den Auslass 48 hinauszufließen.

Damit beim Durchströmen der Teilräume 58, 60 eine hinreichende Verwirbelung des Wassers erfolgt, ragen von dem ersten Innenrohr 14 Verwirbelungselemente wie Vorsprünge 62, 64, 66, 68 ab, die unter verschiedenen Winkeln von dem ersten Innenrohr 14 ausgehen und mit diesem vorzugsweise durch Schweißen verbunden sind. Somit bilden die Vorsprünge 62, 64, 66, 68 Verwirbelungselemente, die mit zu einer Vitalisierung des durchströmenden Wassers führen. Zwischen den Bodenwandungen 18, 20 des ersten und zweiten Innenrohrs 14, 16 strömt das Wasser vorzugsweise ungehindert.

Die Vorsprünge 62, 64, 66, 68 und der Querschnitt der Teilräume 58, 60 ist derart auf die Einlass- und Auslassöffnungen 46, 48 ausgelegt, dass bei maximalem Durchfluss ein maximaler Druckverlust von 0,4 bar auftritt.

Die Außenummantelung 12 sowie das erste und zweite Innenrohr 14, 16, die Muffen 50, 52, die Vorsprünge 62, 64, 66, 68, die Trennelemente 54, 56 und die nicht dargestellten Nieten zum Verschließen der Öffnungen 36, 38, 40 bestehen bevorzugterweise aus Edelstahl. Andere geeignete Materialien, die zu einer gewünschten Beeinflussung des durch das Gehäuse 10 strömenden Wassers bzw. die erforderliche Neutralität bieten, sind gleichfalls möglich. Keramik oder Glas sind beispielhaft zu nennen.

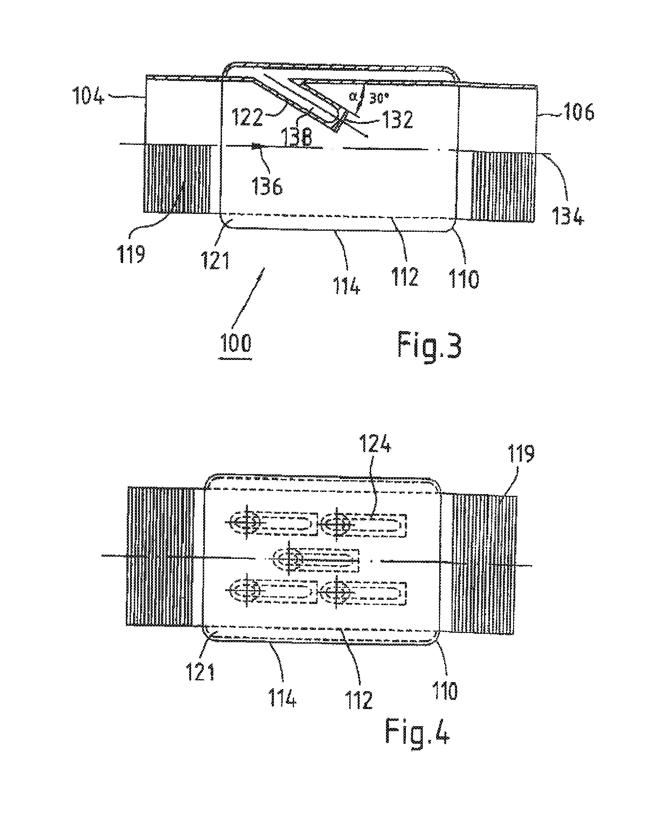

Den Fig. 3 bis 6 ist eine weitere Ausführungsform eines Vitalisierungsgerätes zu entnehmen, das zum Beispiel in eine Wasserleitung eingeschraubt werden kann. Ein entsprechendes Vitalisierungsgerät 100 kann für Bewässerungsanlagen, Garten- oder Schwimmteiche oder Badeseen eingesetzt werden, um nur beispielhaft Anwendungen zu nennen.

Das Vitalisierungsgerät 100 besteht aus einem Gehäuse 110, das aus einem inneren Rohr 112 und einem Außenrohr 114 bzw. Abschnitten von Rohren zusammengesetzt ist. Dabei ist das Außenrohr 114 mit seinen Stirnrändern 116, 118 mit dem Innenrohr 112 verschweißt, das außenseitig ein Gewinde 119 aufweisen kann. Hierdurch ergibt sich die Möglichkeit eines einfachen flüssigkeitsdichten Einschraubens in eine Wasserleitung. Die Einlass- und Auslassöffnung des Gehäuses 110 sind mit 104 und 106 gekennzeichnet.

Das Außenrohr 114 muss nicht zwingend ein Rundrohr sein. Vielmehr sind andere Geometrien wie Vielkantrohr wie Sechskantrohr gleichfalls möglich.

Der Zwischenraum zwischen Innenrohr 112 und Außenrohr 116 dient als Aufnahme 121 für ein das Gerät 100 durchströmendes Wasser, das - wie dies zuvor erläutert worden ist - vitalisiert werden soll.

Um das Wasser innerhalb des Gehäuses 110, also innerhalb des Innenrohrs 112 im erforderlichen Umfang zu verwirbeln, um somit einen hinreichenden Kontakt zu den Bereichen zu erzielen, in denen sich das das Wasser beeinflussende Medium befindet, gehen von dem Innenrohr 112 rohrartige Vorsprünge aus, die beispielhaft mit den Bezugszeichen 122, 124, 126, 128, 130 gekennzeichnet sind. Bei den Vorsprüngen 122, 124, 126, 128, 130 handelt es sich um hohle Rundstahlelemente, die in entsprechende lochartige Aussparungen des Innenrohrs 112 eingeschweißt sein können. Die Vorsprünge 122, 124, 126, 138, 130 sind endseitig verschlossen (siehe z. B. Stirnwandung 132 des Vorsprungs 122) und stehen mit dem zwischen dem Innenrohr 112 und dem Außenrohr 114 verlaufenden die Aufnahme 121 bildenden Zwischenraum in Verbindung. Folglich sind die Vorsprünge 124, 126, 128, 130 gleichfalls mit dem das Wasser beeinflussenden Medium gefüllt.

Die Vorsprünge 122, 124, 126, 128, 130 erstrecken sich geneigt in Richtung Mittelachse 134 des Gehäuses 110 und erstrecken sich entlang der Strömungsrichtung 136 des das Gerät 100 durchströmenden Wassers. Dabei schließt die Längsachse 138 des jeweiligen Vorsprungs 122, 124, 126, 128, 130 zur Längsachse 134 des Gehäuses 100 und damit des Innenrohrs 112 bzw. Außenrohrs 114 einen Winkel α ein, der insbesondere zwischen 15° und 45°, vorzugsweise bei 30° liegt.

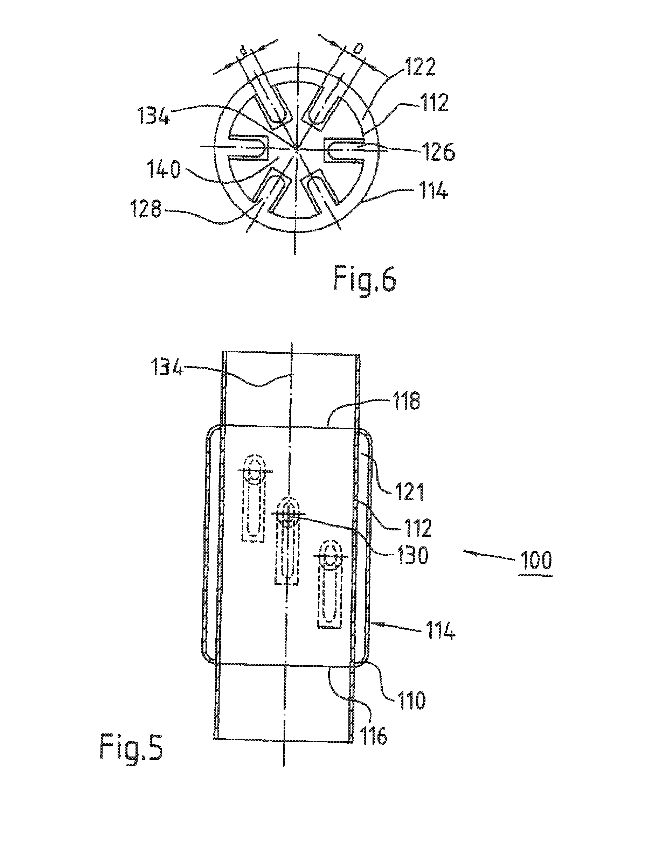

Des Weiteren ist aus der Fig. 6 erkennbar, dass die Vorsprünge 126, 128 in Längsrichtung des Gehäuses 110 betrachtet radial verlaufen und gleichmäßig verteilt vom Innenrohr 112 ausgehen. Ferner enden die Vorsprünge 122, 124, 126, 128, 130 im Abstand zur Mittelachse 134 des Gehäuses 110 und begrenzen entsprechend der Geometrie der gewählten Vorsprünge 120, 124, 126, 128, 130 einen etwa im Querschnitt sechseckigen Innenraum 140.

Das zu vitalisierende Wasser strömt folglich zwischen den Vorsprüngen 124, 126, 128, 130 und der Innenfläche 140 des Innenrohrs 112 zum einen und zum anderen zwischen dem sechskantsäulenförmigen von den Vorsprüngen 122, 124, 126, 128, 130 begrenzten Raum 140, der als Kernraum bezeichnet werden kann.

Des Weiteren ergibt sich aus den Fig. 4 und 5, dass die Vorsprünge 122, 124, 126, 128, 130 von verschiedenen Querschnittsebenen des Innenrohrs 112 ausgehen, so dass die Vorsprünge 122, 124, 126, 128, 130 quasi über den Innenumfang des Innenrohrs 112 und über dessen Höhe verteilt angeordnet sind.

Beispielhafte Abmessungen des Gerätes 100 sind:
Länge des Außenrohrs 114: 90 mm,
Innendurchmesser des Innenrohrs 112: 50 mm,
Außendurchmesser des Außenrohrs 114: 60 mm,
Außendurchmesser D der Vorsprünge 122, 124, 126, 128, 130: 10 mm,
Innendurchmesser d der Vorsprünge 122, 124, 126, 128, 130: 7 mm,
mittlere Länge der Vorsprünge 122, 124, 126, 128, 130: 36 mm.

Das Innen- und Außenrohr 112, 114 sowie die Vorsprünge 122, 124, 126, 128, 130 sollten aus Edelstahl bestehen. Ferner sind die Bereiche des Vitalisierungsgeräts 100, die mit dem durchströmenden Wasser in Berührung kommen, vorzugsweise mit einem desinfizierenden Material versehen wie beschichtet. Als bevorzugtes Material ist Silber zu nennen. Andere geeignete Materialien sowohl für das Gehäuse 110 bzw. die Beschichtungen kommen gleichfalls in Frage.

Weist das Innen- und Außenrohr 112, 114 vorzugsweise eine Zylindergeometrie auf, so sind andere Gestaltungen gleichfalls möglich.

Des Weiteren zeichnet sich die Erfindung dadurch aus, dass zumindest die Bereiche des Vitalisierungsgerätes, die mit dem zu vitalisierenden Wasser in Kontakt gelangen, magnetisierbar sind. Dies kann durch eine Beschichtung oder das Material des Innen- und Außenrohrs 14, 16 und der Vorsprünge 62, 64, 66, 68 gemäß Fig. 1 und 2 bzw. Innenrohrs 112 und der Vorsprünge 122, 124, 126, 128, 130 realisiert werden. Auch können die entsprechenden Abschnitte zum Beispiel aus Edelstahl mit Eisenanteilen bestehen.

Das Vitalisierungsgerät selbst kann unmittelbar an einen Wasseranschluss wie Wasserhahn angebracht wie angeschraubt werden. Ein Anordnen in einem Wasserkreislauf ist gleichfalls möglich, um nur einige Beispiele zu nennen.

Das erfindungsgemäße Vitalisierungsgerät kann insbesondere auch in geschlossene Wasserkreisläufe wie Kühlsysteme oder Heizungsanlagen eingebaut werden.

## Patentansprüche

1. Anordnung zum Vitalisieren von Wasser umfassend ein Gehäuse (110) mit einer Wasserein- und -auslassöffnung (104, 106), wobei im Strömungsweg zwischen Einlass- und Auslassöffnung eine Verwirbelungseinrichtung (122, 124, 126, 128, 130) verläuft und der Strömungsweg zumindest abschnittsweise von einer Aufnahme (122) begrenzt ist, in der ein das Wasser beeinflussendes Medium enthalten ist,
**dadurch gekennzeichnet,**
**dass** das Gehäuse (110) doppelwandig mit Außen- und Innenwandung (112, 114) ausgebildet ist, die die geschlossene Aufnahme (122) für das Medium begrenzen, dass die Innenwandung den Strömungsweg begrenzt und dass von der Innenwandung (112) sich in den Strömungsweg erstreckende die Verwirbelungseinrichtung bildende Vorsprünge (122, 124, 126, 128, 130) ausgehen und die Einlassöffnung (104) im Bereich einer Stirnseite und die Auslassöffnung (106) im Bereich einer Stirnseite und die Auslassöffnung (106) in gegenüberliegender Stirnseite des Gehäuses (110) verläuft.

2. Anordnung nach Anspruch 1,
**dadurch gekennzeichnet,**
**dass** die Innenwandung durch einen ersten Rohrabschnitt (112) gebildet ist, der von einem die Außenwandung bildenden zweiten Rohrabschnitt (114) umgeben ist, dessen Ränder (116, 118) mit dem ersten Rohrabschnitt verbunden wie verschweißt sind.

3. Anordnung nach Anspruch 1 oder 2,
**dadurch gekennzeichnet,**
**dass** von dem ersten Rohrabschnitt (112) die als hohle Rundelemente ausgebildete Vorsprünge (122, 124, 126, 128, 130) ausgehen, die mit der das Medium enthaltenen Aufnahme (122) verbunden sind, wobei insbesondere die das Medium enthaltenden hohlen Elemente Rundstahlelemente sind.

4. Anordnung nach zumindest einem der vorhergehenden Ansprüche,
**dadurch gekennzeichnet,**
**dass** die Vorsprünge (122, 124, 126, 128, 130) in Strömungsrichtung geneigt zur Längsachse (134) des Gehäuses (110) verlaufen.

5. Anordnung nach zumindest einem der vorhergehenden Ansprüche,
**dadurch gekennzeichnet,**
**dass** jeweilige Längsachse (138) der Vorsprünge (122) zur Längsachse (134) des Gehäuses (110) einen Winkel α mit 45° ≥ α ≥ 15°, insbesondere α ≈ 30° einschließt.

6. Anordnung nach zumindest einem der vorhergehenden Ansprüche,
**dadurch gekennzeichnet,**
**dass** jeweiliges freies Ende (132) der Vorsprünge (122) beabstandet zur Mittelachse (134) des ersten Rohrabschnitts (112) verläuft.

7. Anordnung nach zumindest einem der vorhergehenden Ansprüche,
**dadurch gekennzeichnet,**
**dass** die Vorsprünge (122, 124, 126, 128, 130) in Längsrichtung (134) des Innenrohrs (112) betrachtet radial verlaufen.

8. Anordnung nach zumindest einem der vorhergehenden Ansprüche,
**dadurch gekennzeichnet,**
**dass** die Vorsprünge (122, 124, 126, 128, 130) in Längsrichtung (134) des Innenrohrs (112) betrachtet gleichmäßig auf Innenfläche des Innenrohrs verteilt angeordnet sind.

9. Anordnung nach zumindest einem der vorhergehenden Ansprüche,
**dadurch gekennzeichnet,**
**dass** in Längsrichtung (134) des ersten Rohrabschnitts (112) betrachtet Vorsprünge (122, 124, 126, 128, 130) von voneinander abweichenden Querschnittsebenen des ersten Rohrabschnitts ausgehen.

10. Anordnung nach zumindest einem der vorhergehenden Ansprüche,
**dadurch gekennzeichnet,**
**dass** der erste Rohrabschnitt (112) außerhalb des zweiten Rohrabschnitts (114) ein Außengewinde (119) aufweist.

11. Anordnung nach zumindest einem der vorhergehenden Ansprüche,
**dadurch gekennzeichnet,**
**dass** mit dem Wasser in Berührung gelangende Bereiche der Vorrichtung (100) mit einem desinfizierenden Material versehen wie beschichtet sind oder ein solches Material aufweisen.

12. Anordnung nach zumindest einem der vorhergehenden Ansprüche,
**dadurch gekennzeichnet,**
**dass** die mit dem Wasser in Berührung gelangenden Bereiche der Vorrichtung (100) mit Silber oder einem Silber enthaltenden Material versehen wie beschichtet sind oder Silber oder Silber enthaltendes Material aufweisen.

13. Anordnung nach zumindest einem der vorhergehenden Ansprüche,
**dadurch gekennzeichnet,**
**dass** mit dem Wasser in Berührung gelangende Bereiche der Vorrichtung (100) magnetisierbar sind, insbesondere die mit dem Wasser in Berührung gelangenden Bereiche der Vorrichtung aus magnetisierbarem Material bestehen oder mit einem solchen versehen sind.
